# EUROPÄISCHE PATENTSCHRIFT

(11) **EP 2 051 874 B1**
(45) Veröffentlichungstag und Bekanntmachung des Hinweises auf die Patenterteilung: **18.04.2012**
(21) Anmeldenummer: 07786485.8
(22) Anmeldetag: 01.08.2007
(51) Int. Cl.: B60K 17/36, F16D 11/10, F16D 25/0638, F16D 43/284

(54) **TANDEMACHSE MIT ZWEI ANTREIBBAREN ACHSEN UND EINEM TEILWEISE ABSCHALTBAREN ANTRIEBSSTRANG**
TANDEM AXLE HAVING TWO DRIVABLE AXLES AND A DRIVETRAIN WHICH CAN BE PARTIALLY DEACTIVATED
ESSIEU TANDEM DOTE DE DEUX ESSIEUX ENTRAINES ET D'UN TRAIN D'ENTRAINEMENT AU MOINS PARTIELLEMENT DEBRAYABLE

(30) Priorität: 17.08.2006 DE 102006038520; 23.09.2006 DE 102006045007
(43) Veröffentlichungstag der Anmeldung: 29.04.2009
(73) Patentinhaber: Daimler AG, 70327 Stuttgart (DE)
(72) Erfinder: HAMPERL, Johann, 73728 Esslingen (DE); HELFRICH, Michael, 71397 Leutenbach (DE); MIERISCH, Uwe, 34225 Baunatal (DE); MULZER, Ferdinand, 70176 Stuttgart (DE)
(74) Vertreter: Moore, Derek
(86) Internationale Anmeldenummer: PCT/EP2007/006797
(87) Internationale Veröffentlichungsnummer: WO 2008/019759

(56) Entgegenhaltungen:
- WO-A-02/46030
- WO-A-2005/110799
- DE-A1- 19 723 324
- GB-A- 820 103
- JP-A- 8 337 125

## Beschreibung

Die Erfindung betrifft eine Tandemachse mit zwei antreibbaren Achsen, wobei jede Achse ein Ausgleichsgetriebe mit einem über eine Welle antreibbaren Antriebszahnrad als Ausgleichsgetriebeeingang und zwei die Räder dieser Achse über Achswellenräder antreibende Antriebshalbwellen umfasst.

Aus der DE 39 12 172 A1 ist ein Fahrzeugvierradantrieb bekannt, dessen Antriebssystem einen Antriebsmotor, ein Schaltgetriebe, zwei von diesem direkt angetriebene Vorderräder und zwei zuschaltbare Hinterräder aufweist. Zwischen den Hinterrädern und dem Schaltgetriebe ist ein Antriebsstrang aus einer Kardanwelle, einem Differential und zwei Antriebshalbwellen angeordnet. Die Hinterräder werden jeweils über einen Freilauf angetrieben, sofern bei zugeschalteter Kardanwelle die zwischen dem jeweiligen Freilauf und der antreibenden Antriebshalbwellen angeordnete Kupplung geschlossen ist.

Die GB 820,103 beschreibt eine Tandemachse mit zwei antreibbaren Achsen, bei welcher eine erste Achse dauernd mit einer Antriebswelle gekoppelt ist. Eine zweite Achse kann mittels einer zwischen der ersten und zweiten Achse angeordneten Kupplung mit der Antriebswelle verbunden oder getrennt werden. Die Räder der zweiten Achse sind dauernd mit einem Ausgleichsgetriebe der zweiten Achse verbunden.

Die gattungsgemäße JP 8337125 beschreibt eine Tandemachse mit zwei antreibbaren Achsen, gemäß dem einheitenden Teil des Anspruchs 1, bei welcher eine erste, in Fahrtrichtung gesehen hintere Achse dauernd mit einer Antriebswelle gekoppelt ist. Eine zweite Achse kann mittels eines zwischen der ersten und zweiten Achse angeordneten Schaltelements mit der Antriebswelle verbunden oder getrennt werden. Eines der beiden Räder der zweiten Achse ist dauernd mit einem Ausgleichsgetriebe der zweiten Achse verbunden, das andere Rad kann mittels einer Freilaufkupplung vom Ausgleichsgetriebe abgekoppelt werden.

Der vorliegenden Erfindung liegt die Problemstellung zugrunde, eine mit zwei antreibbaren Achsen ausgestattete Tandemachse zu entwickeln, die einen Beitrag leistet, um zum einen den fahrzeugseitigen Kraftstoffbedarf zu verringern und zum anderen den achsseitigen Reifenverschleiß zu reduzieren.

Diese Problemstellung wird mit den Merkmalen des Anspruchs 1 gelöst. Dabei sind die Räder der ersten Achse mit dem Antriebszahnrad dieser Achse dauernd zwangsgekoppelt. Das Antriebszahnrad der ersten Achse hat eine Antriebswelle, auf der ein zuschaltbares Verteilerrad sitzt. Das Verteilerrad kämmt mit einem auf einer Durchtriebswelle drehsteif angeordneten Durchtriebswellenrad. Der Ausgang der Durchtriebswelle ist mit dem eingangsseitigen Antriebszahnrad der zweiten Achse über Zwischenglieder gekoppelt. In der zweiten Achse sind zwischen den Achswellenrädern und deren benachbarten Rädern schaltbare Kupplungen angeordnet.

Bei konventionellen Tandemachsen wird das gesamte vom Antrieb zur Verfügung gestellte Drehmoment über zwei Achsen auf die Fahrbahn übertragen, unabhängig davon, ob das Drehmoment benötigt wird oder nicht. Oft braucht man das gesamte Drehmoment nur beim Anfahren oder bei Bergfahrten. Außerhalb der letztgenannten Betriebszustände genügt es in der Regel, ein geringeres Drehmoment beispielsweise nur über die erste der beiden Achsen zu leiten. Um für diese Situationen das gesamte Drehmoment bereit zu stellen, kann eine z.B. automatisch schaltbare Kupplung die Trennung und Wiederherstellung des Kraftflusses zwischen der ersten und der zweiten Achse steuern oder regeln.

Durch das bedarfsweise Abschalten einer kompletten Achse, einschließlich des Stillsetzens des Antriebsstranges zwischen der ersten Achse und den Rädern der zweiten Achse, wird eine messbare Verbrauchskosteneinsparung erzielt. Durch das Schleppen der zweiten Achse wird der Kraftstoffverbrauch und der Reifenverschleiß sowie der mechanische Verschleiß aller am Vortrieb dieser Achse beteiligten Zahnräder und Gelenke reduziert. Zusätzlich gibt es keine Planschverluste im Ausgleichsgetriebe der zweiten Achse.

Weitere Einzelheiten der Erfindung ergeben sich aus den Unteransprüchen und der nachfolgenden Beschreibung einer schematisch dargestellten Ausführungsform:
- Figur 1:: Antriebsstrang einer Tandemachse, beide Achsen sind angetrieben;
- Figur 2:: wie Figur 1, jedoch ist die zweite Achse ist vom Antriebsstrang abgekuppelt. Die Differentialräder und die Durchtriebwelle rotieren nicht;
- Figur 3:: mehrfach versetzter Querschnitt durch den Achskörper in der Höhe des Differentials;
- Figur 4:: Ausschnitt aus Figur 3 mit Varianten.
- Figur 5:: dimetrischer Teilschnitt durch ein Differential mit abkuppelbaren Achswellenrädern.

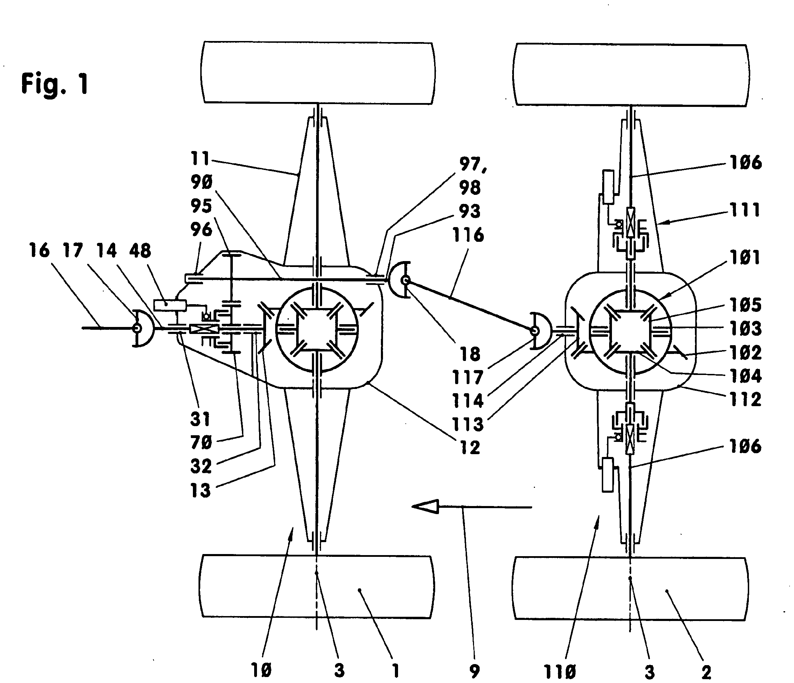

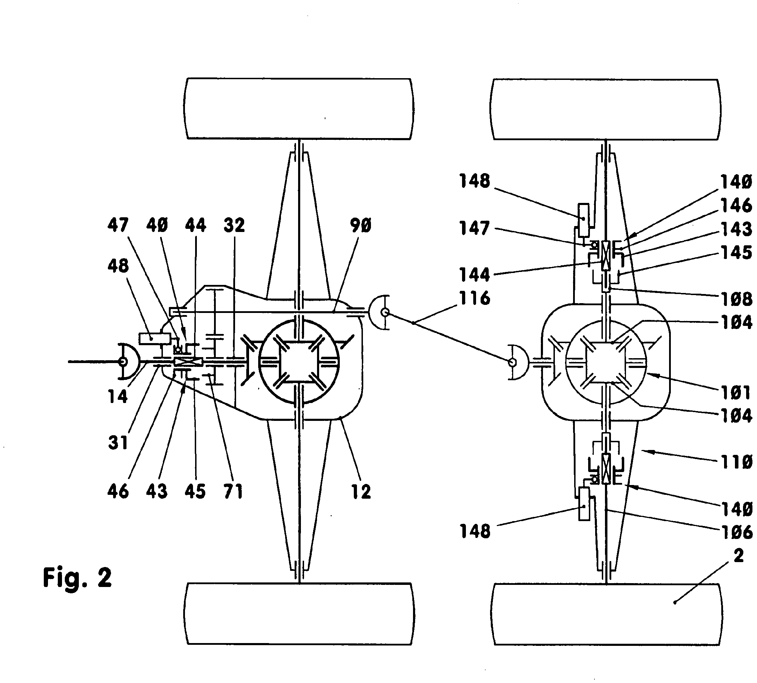

Die Figuren 1 und 2 zeigen den hinteren Teil des Antriebsstranges einer Tandemachse einer Sattelschlepperzugmaschine in Symboldarstellung von oben. Die Tandemachse hat eine erste, vordere Achse (10) und eine zweite, hintere Achse (110). Beide Achsen (10, 110) sind hier nur beispielhaft als Starrachsen dargestellt.

Der Achsantrieb (101) der einzelnen Achse (10, 110) ist jeweils in einem Achskörper (11, 111) gelagert. Im mittleren Bereich des Achskörpers (11, 111) ist dazu ein Differentialgehäuse (12, 112) angeordnet. Das einzelne Differentialgehäuse (12, 112) hat als Getriebeeingang ein Antriebskegelrad (13), dessen Mittellinie (15) zumindest annähernd parallel zur Fahrtrichtung (9) verläuft. Letzteres kämmt mit einem Tellerrad (102), das an einem Ausgleichsgehäuse (103) angeordnet ist und dessen Mittellinie die Raddrehachse (3) ist. Im Ausgleichsgehäuse (103) sind mehrere Ausgleichskegelräder (105) gelagert. Ihre Mittellinien liegen in einer Ebene, die normal zur Raddrehachse (3) orientiert ist. Die Mittellinien der Ausgleichskegelräder (105) schneiden sich auf der Raddrehachse (3). Die Ausgleichskegelräder (105) stehen mit den - im Achskörper (11, 111) gelagerten - an den Antriebshalbwellen (106) drehfest befestigten Achswellenrädern (104) im Eingriff. Die Antriebshalbwellen (106) treiben die Räder (1,2) an.

Die Antriebskegelräder (13, 113) der einzelnen Achsen (10, 110) werden über Wellengelenke (17, 117) von Gelenkwellen (16, 116) angetrieben.

Nach den Figuren 1 und 2 ist das Differentialgehäuse (12) der vorderen Achse (10) vergrößert ausgebildet. In diesem Gehäuse (12) wird eine zuschaltbare Durchtriebswelle (90) zusätzlich gelagert. Dazu ist die im Gehäuse (12) in zwei Lagerstellen (31, 32) gelagerte Antriebswelle (14) des Antriebskegelrades (13) verlängert ausgeführt. Zwischen den beiden Lagerstellen (31) und (32) sitzt auf der Antriebswelle (14) eine mechanische Kupplung (40) und ein Verteilerrad (70).

Das Verteilerrad (70) ist z.B. ein schrägverzahntes Stirnrad, das dauernd mit einem auf der Durchtriebswelle (90) starr angeordneten Durchtriebswellenrad (95) kämmt. Links neben dem Verteilerrad (70) befindet sich die, außerhalb des Schutzbereiches der Erfindung liegende, fremdgeschaltete, formschlüssige Kupplung (40), vgl. Figuren 1 und 2. Die Kupplung (40) besteht aus einer, über eine Schaltgabel (47) längsverschieblich antreibbaren, Schaltmuffe (43). Die Schaltmuffe (43) sitzt über eine formschlüssige Wellen-Naben-Verbindung (44) zwischen den beiden Lagerstellen (31) und (32). Die Wellen-Naben-Verbindung (44) ist beispielsweise eine Feder-, eine Keilwellen- oder eine Zahnwellenverbindung. Die Schaltmuffe (43) greift - im gekuppelten Zustand, vgl. Figur 1, - mit einer Innenverzahnung (45) in eine seitliche am Verteilerrad (70) angeordnete Außenverzahnung (71) ein. Links neben der Innenverzahnung (45) hat die Schaltmuffe (43) eine Schaltnut (46), in die eine von einem Stellglied (48) angetriebene Schaltgabel (47) eingreift, vgl. auch Figur 2.

Die Schaltmuffe (43) ist nach den Figuren 1 und 2 nur bei Stillstand oder bei Synchronlauf der Kupplungsteile Schaltmuffe (43)/Verteilerrad (70) schaltbar. Um bei fahrendem Nutzfahrzeug einen Synchronlauf zu erzwingen, kann zwischen die Schaltmuffe (43) und das Verteilerrad (70) eine Synchronisiereinrichtung z.B. mit Sperrverzahnung nach dem System Borg-Warner oder Porsche geschaltet werden.

Das Stellglied (48) kann beispielsweise ein elektromechanischer, elektromagnetischer, hydraulischer oder pneumatischer Antrieb sein.

Die Durchtriebswelle (90) ist im Differentialgehäuse (12) z.B. in zwei Lagerstellen (96) und (97, 98) wälzgelagert angeordnet. Das Wellenende (93) ragt im Bereich der hinteren Stirnseite des Differentialgehäuses (12) ins Freie. Das Wellenende (93) bzw. der Ausgang der Durchtriebswelle (90) und das vordere Wellenende der Antriebswelle (114) der zweiten Achse (110) sind über Zwischenglieder miteinander verbunden. Diese Zwischenglieder sind eine Gelenkwelle (116) und zwei Kardangelenke (18, 117). Die Gelenkwelle (116) befindet sich zusammen mit den Kreuzgelenken (18, 117) in der Z-Anordnung.

In Figur 1 ist der gesamte drehmomentbelastete Antriebsstrang mit vergrößerter Strichstärke dargestellt. Danach sind hier die Räder (1, 2) beider Achsen (10, 110) angetrieben.

Nach Figur 2 greift die Schaltmuffe (43) nicht in das Verteilerrad (70) ein. Folglich überträgt die Antriebswelle (14) kein Drehmoment auf das Verteilerrad (70). Somit wird die - in verringerter Strichstärke dargestellte - Durchtriebswelle (90) und die zweite Achse (110) nicht angetrieben. Zeitgleich oder zeitlich versetzt werden die in der zweiten Achse angeordneten Kupplungen (140) auskuppelnd betätigt. Die zwischen den Rädern (2) und den Achswellenrädern (104) sitzenden Kupplungen (140) sind bezüglich des Aufbaus und der Funktion beispielsweise vergleichbar mit der Kupplung (40). Die Schaltmuffen (143) sind über eine formschlüssige Wellennabenverbindung (144) auf den jeweiligen Antriebshalbwellen (106) gelagert. Die Schaltmuffen (143) greifen im gekuppelten Zustand, vgl. auch Figur 1, in die Verzahnungen (145) ein. Letztere sitzen z.B. angeformt auf den Abschnitten der Antriebshalbwellen (106), die die Achswellenräder (104) drehsteif tragen.

In dem Ausführungsbeispiel nach den Figuren 1 und 2 ist der jeweilige radseitige Abschnitt der Antriebshalbwelle (106) über Nadellager in einer stirnseitigen Bohrung (108) des differentialseitigen Abschnitts der Antriebshalbwelle (106) geführt.

Zum Schalten der Kupplungen (140) sind hier im Achskörper (111) zwei Stellglieder (148) angeordnet. Jede Kupplung (140) benötigt mindestens ein Stellglied (148). Ggf. können auch beide Kupplungen über ein Stellglied betätigt werden.

Die Stellglieder wirken über Schaltgabeln (147) auf die Schaltmuffen (143). Dazu greifen die Schaltgabeln (147) in die Schaltnuten (146) der Schaltmuffen (143) ein. Bezüglich der Synchronisation wird auf die Ausführungen zu Kupplung (40) verwiesen.

Die beiden Kupplungen (140) der Achse (110) können baugleich gestaltet werden.

Durch das auskuppelnde Betätigen der Kupplungen (140) wird der Antriebsstrangteil, der aus dem Verteilerrad (70), der Durchtriebswelle (90), der Gelenkwelle (116) und dem Differential (101) besteht, vollständig von der Rotationsbewegung der antriebslos rollenden Räder (2) getrennt, so dass er u.a. durch die Strömungswiderstände der Ölsumpfschmierung schnell zum Stillstand kommt.

Alle Lagerstellen für die in den Achsantrieben verwendeten Wellen und Zahnräder sind nur aus Vereinfachungsgründen symbolisch als Gleitlager dargestellt. Selbstverständlich sind die meisten Lagerstellen in den regulären Ausführungen als Wälzlager ausgebildet.

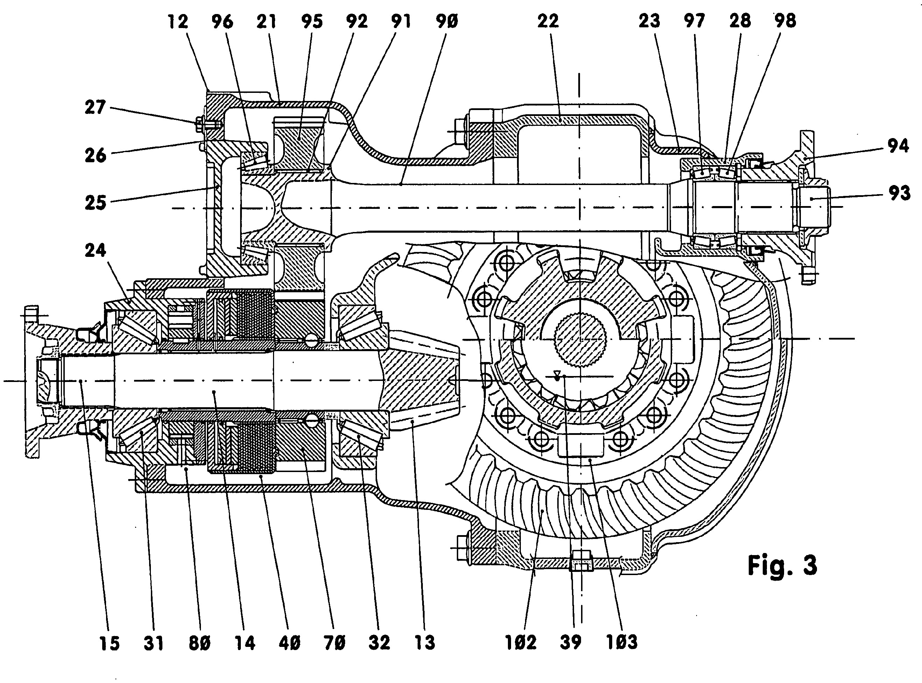

Figur 3 zeigt einen mehrfach versetzten Längsschnitt durch das Differentialgehäuse (12) des Achskörpers der vorderen Achse (10). Das Differentialgehäuse (12) besteht im Ausführungsbeispiel aus einem vorderen Gehäuseteil (21), einem Kessel (22) und einem Kesseldeckel (23). Das z.B. gegossene Gehäuseteil (21) ist an dem geschweißten Kessel (22) angeschraubt. Nach hinten ist der Kessel (22) über den angeschweißten Kesseldeckel (23) verschlossen. Der Schmierölstand (39) liegt knapp oberhalb der Mittellinie (15) der Antriebswelle (14).

Die Antriebswelle (14) mit dem angeformten Antriebskegelrad (13) sitzt über die Kegelrollenlager (31, 32) im vorderen Gehäuseteil (21). Das vordere Kegelrollenlager (31) ist dazu in einem Flanschdeckel (24) angeordnet. Das Antriebskegelrad (13) kämmt mit dem Tellerrad (102). Letzteres trägt das Ausgleichsgehäuse (103). Oberhalb des Ausgleichsgehäuses (103) verläuft die Durchtriebswelle (90) z.B. parallel zur Antriebswelle (14). Die Durchtriebswelle (90) ist mit ihrem vorderen Ende in einem Einschraubdeckel (25) gelagert. Der Einschraubdeckel (25) sitzt zum Beispiel über ein Feingewinde (26) im vorderen Gehäuseteil (21). Er trägt ein Kegelrollenlager (96), in dessen Innenring das vordere Ende der Durchtriebswelle (90) eingesteckt ist.

Das hintere Wellenende (93) der Durchtriebswelle (90) sitzt über zwei - das Festlager bildende - in X-Anordnung ausgerichtete Kegelrollenlager (97, 98) in einer Lagerbuchse (28). Letztere ist in den Kesseldeckel (23) eingeschweißt. Auf diesem Wellenende (93) ist ein Flansch (94) zur Aufnahme eines Wellengelenkes (18) befestigt. Die Durchtriebswelle (90) kann als Hohlwelle ausgeführt sein.

Das Durchtriebswellenrad (95) ist auf dem vorderen Wellenende zwischen einem Wellenbund (91) und dem vorderen Kegelrollenlager (96) angeordnet. Es ist dort über eine Keilwellenverbindung (92) drehfest auf der Durchtriebswelle (90) fixiert. Alternativ kann das Durchtriebswellenrad (95) auch an der Durchtriebswelle (90) angeformt sein.

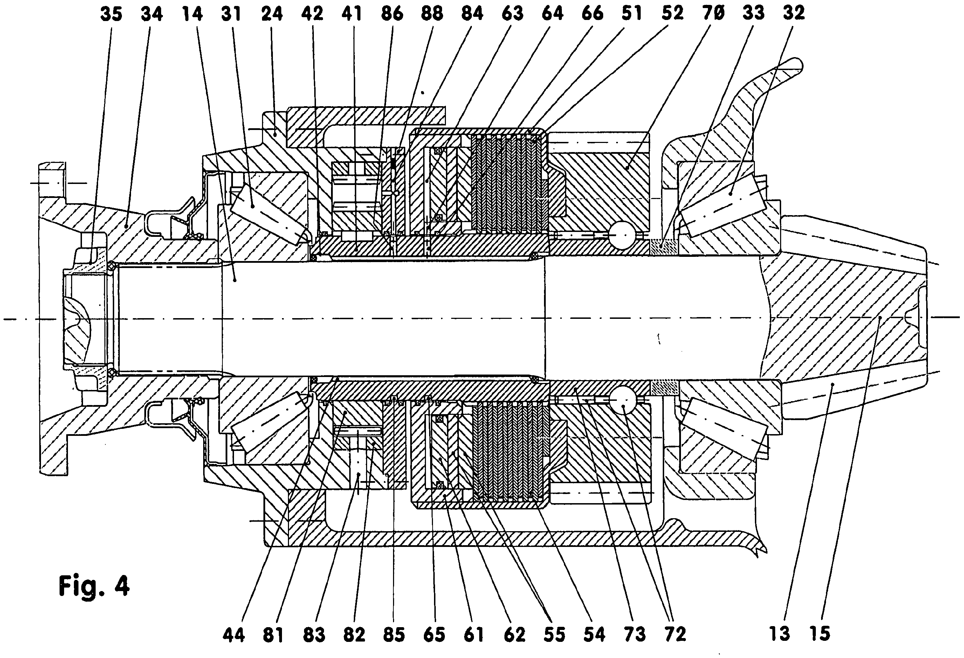

Das Durchtriebswellenrad (95) kämmt mit dem auf der Antriebswelle (90) gelagerten Verteilerrad (70), vgl. Figur 4.

Zwischen den Kegelrollenlagern (31, 32) der Antriebswelle (14) sind das Verteilerrad (70) mit seinem kombinierten Nadel/Kugellager (72), eine reibschlüssige Schaltkupplung (40) und eine Ölpumpe (80) angeordnet. Dazu sitzen verspannt zwischen den Innenringen der Lager (31, 32) eine Kupplungsnabe (41), der Innenring (73) des Wälzlagers (72) und eine Einstellscheibe (33). Letztere dient der Einstellung des Lagerspiels der Kegelrollenlager (31, 32) in Kombination mit einer zusätzlich den Antriebsflansch (34) fixierenden Wellenmutter (35).

Auf dem Innenring (73) ist das Verteilerrad (70) direkt gelagert. Links neben dem Verteilerrad (70) befindet sich erfindungsgemäß die tauchgeschmierte Lamellenkupplung (40), die bei Last ein- und ausgerückt werden kann. Der Außenring (51) dieser Kupplung (40) ist mit dem Verteilerrad (70) verschraubt. Er lagert die Außenlamellen (52) drehfest, aber axial beweglich. Zwischen den Außenlamellen (52) liegen die beispielsweise sinusförmig gewellten Innenlamellen (54). Letztere sind drehfest und axial beweglich auf der Kupplungsnabe (41) gelagert. Am Außenring (51) ist ein Ringzylinder (61) befestigt. Der Ringzylinder (61) führt einen hydraulisch betätigbaren Ringkolben (62). Er hat beispielsweise eine Vielzahl von radialen Bohrungen (64), die den Zylinderraum (63) mit der Bohrung (66) der Kupplungsnabe (41) hydraulisch verbinden. Der Ringkolben (62) wirkt über Druckplatten (55) auf das Lamellenpaket (52, 54).

Die schlupffähige Lamellenkupplung (40) ersetzt bei dem gezeigten Tandemachsenantriebsstrang ein Ausgleichsgetriebe zwischen der ersten und der zweiten Achse.

Zwischen der Kupplung (40) und dem Kegelrollenlager (31) ist die Ölpumpe (80) angeordnet. Die Pumpe ist beispielsweise eine Sichelzellenpumpe (80), deren Innenrad (81) drehfest auf der rotierenden Kupplungsnabe (41) sitzt. Das Innenrad (81) treibt das als Hohlrad ausgeführte Außenrad (82) an. Letzteres ist im Flanschdeckel (24), der hier auch als Pumpengehäuse benutzt wird, gelagert. Das von der Pumpe (80) über die Saugbohrung (83) angesaugte Öl wird über eine Bohrung (84) in einen Ringkanal (85) gefördert. Die Bohrung (84) und der Ringkanal (85) befinden sich im Deckel (88) der Pumpe (80). Der Ringkanal (85) ist mit der Nabenbohrung (42) über mindestens eine Radialbohrung (86) verbunden. Über die Montagefuge der dortigen Wellen-Naben-Verbindung (44), oder über zusätzliche Längskanäle, gelangt das druckbeaufschlagte Öl über weitere Radialbohrungen (66) in den Ringkanal (65). Über diesen Ringkanal (65) strömt das Öl in den Zylinderraum (63). Die nicht benötigte Ölmenge fließt z.B. über ein Ventil in den Sumpf zurück.

Soll die zweite Achse vom Kraftfluss des Antriebsstrangs getrennt werden, wird die Druckseite der Pumpe (80) über ein dann zu betätigendes Ventil in den Ölsumpf entlastet.

Der Zylinderraum (63) kann zusätzlich auch über eine separate - hier nicht dargestellte - Hydraulikleitung mit Drucköl aus einer anderen Quelle gespeist werden. Dies würde ein sofortiges Schalten der Kupplung ermöglichen, noch bevor der Antriebsstrang in Bewegung versetzt wird.

Eine alternative Variante sieht vor, die Kupplung unter der Last einer mechanischen oder pneumatischen Feder oder einem entsprechenden Federsystem geschlossen zu halten. Eine hydraulische Ringzylinder-Kolben-Einheit, vergleichbar mit der aus Figur 4, würde dann zum Lösen der Kupplung (40) benutzt werden. In diesem Fall stehen beim Anfahren des Nutzfahrzeuges zunächst immer beide Achsen (10, 110) zur Verfügung.

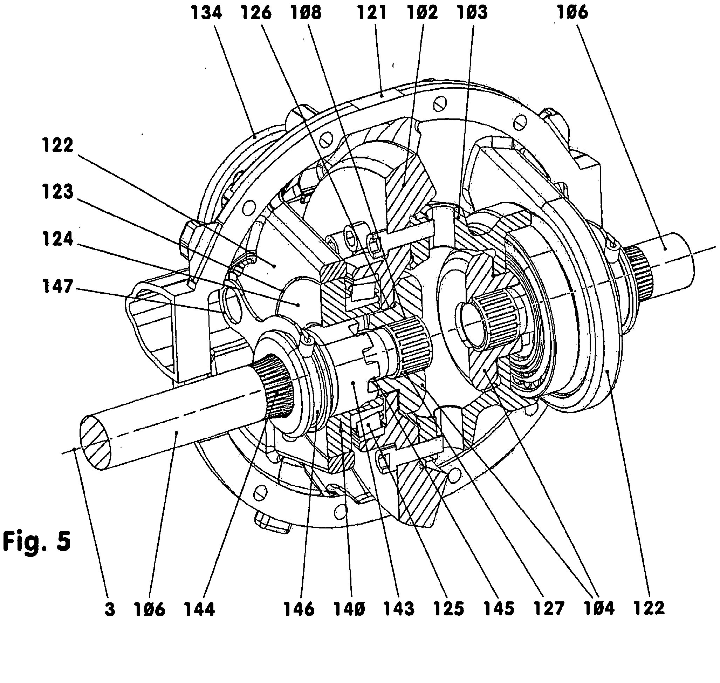

In der Figur 5 ist der vordere Gehäuseteil (121) des Differentialgehäuses (112) der zweiten Achse (110) dimetrisch dargestellt. Das Gehäuseteil (121) weist zwei, in den hier nicht dargestellten Kessel hineinragende, Gehäuseinnenstege (122) auf. Beide Gehäuseinnenstege (122) haben zueinander fluchtende Bohrungen (123) zur Aufnahme von flanschartigen Lagerträgern (124). Die Mittellinien der Bohrungen (123) liegen z.B. auf der Raddrehachse (3). Auf den rohrförmigen Abschnitten der Lagerträger (124) sitzen in O-Anordnung eingesetzte Kegelrollenlager (125). Letztere lagern ein Kombinationsbauteil, das aus dem mit dem Ausgleichsgehäuse (103) verschraubten oder verschweißten Tellerrad (102) besteht.

Das Kombinationsbauteil (102/103) weist zwei einander gegenüberliegende fluchtende Bohrungen (126) auf, deren Mittellinien ebenfalls beispielsweise auf der Raddrehachse (3) liegen. In diesen Bohrungen (126) sind die Achswellenräder (104) gleitgelagert angeordnet. Die Ausgleichskegelräder (105), vgl. Figur 1, und deren Lagerbolzen sind hier nicht dargestellt.

Die Achswellenräder (104) haben jeweils zentrale Bohrungen (108). Zwischen den Wandungen der Bohrungen (108) und dem zumindest abschnittsweise zylindrischen Ende der Antriebshalbwellen (106) sind Nadellager (127) eingebaut, so dass an dieser Stelle die Achswellenräder (104) keine drehfeste Verbindung zu den entsprechenden Antriebshalbwellen (106) haben.

Die drehfeste Verbindung wird nach Figur 5 pro Achsseite über eine schaltbare Klauenkupplung (140) realisiert. Dazu sitzt pro Achsseite eine Schaltmuffe (143) über eine Wellen-Naben-Verbindung (144) auf der Antriebshalbwelle (106) in unmittelbarer Nähe zu dem nächstgelegenen Achswellenrad (104). Die nebeneinander liegenden Bauteile (104) und (143) haben einander zugewandte, mit Schaltklauen (145) ausgestattete Stirnseiten.

Die Schaltmuffe (143) hat eine Schaltnut (146), in die eine Schaltgabel (147) eingreift. Letztere wird durch ein nicht dargestelltes Stellglied angetrieben. Bei einem Betätigen der Kupplung (140) verrasten die Schaltklauen (145) der Bauteile (104) und (143) ineinander. Der Kraftschluss zwischen der Antriebshalbwelle (106) und dem Achswellenrad (104) ist über die Wellen-Naben-Verbindung (144), die Schaltmuffe (143) und die Schaltklauen (145) hergestellt.

Das Zuschalten der zweiten Achse (110) mit dem zusätzlichen Abkuppeln des hinteren Ausgleichsgetriebes kann zum einen vom Fahrer durch das Betätigen eines Bedienelements direkt ausgelöst werden. Zum anderen ist jedoch auch möglich, das Zuschalten der Achse (110) automatisch zu regeln. Dazu werden einer Steuerung z.B. fahrdynamische und fahrbahnseitige Informationen wie Fahrzeuggeschwindigkeit, Fahrzeugbeschleunigung, Motordrehzahl, Gaspedalstellung, Fahrbahnsteigung und Beladungszustand zugeführt. Eine Auswertung dieser Informationen steuert dann das Betätigen der Kupplungen (40) und (140). Lassen sich aus diesen Informationen beispielsweise ein Anfahren, eine Bergfahrt oder das Einleiten einer positiven Beschleunigung ermitteln, so wird, sofern der Beladungszustand des Fahrzeugs diese erfordert, die zweite Achse (110) zugeschaltet.

## Patentansprüche

1. Tandemachse mit zwei antreibbaren Achsen (10, 110), wobei jede Achse (10, 110) ein Ausgleichsgetriebe (101) mit einem über eine Welle (16, 116) antreibbaren Antriebszahnrad (13, 113) als Ausgleichsgetriebeeingang und zwei die Räder (1, 2) dieser Achse (10, 110) über Achswellenräder (104) antreibende Antriebshalbwellen (106) umfasst,
- wobei die Räder (1) der ersten Achse (10) mit dem Antriebszahnrad (13) dauernd zwangsgekoppelt sind,
- wobei das Antriebszahnrad (13) der ersten Achse (10) eine Antriebswelle (14) hat, welche Antriebswelle (14) zwischen der Welle (16) und dem Antriebszahnrad (13) angeordnet ist, wobei auf der Antriebswelle (14) ein zuschaltbares Verteilerrad (70) sitzt,
- wobei das Verteilerrad (70) mit einem auf einer Durchtriebswelle (90) drehsteif angeordneten Durchtriebswellenrad (95) kämmt,
- wobei das Antriebszahnrad (113) den zweiten Achse (110) eine Antriebswelle (114) hat wehle Antriebswelle (114) mit dem Ausgang (93) der Durchtriebswelle (90) über Zwischenglieder (18, 116, 117) gekoppelt ist,
**dadurch gekennzeichnet, dass**
- das Verteilerrad (70) mittels einer bei Last ein- und ausrückbaren Lamellenkupplung (40) zuschaltbar ist,
- und in der zweiten Achse (110) zwischen den Achswellenrädern (104) und deren benachbarten Rädern (2) schaltbare Kupplungen (140) angeordnet sind.

2. Tandemachse gemäß dem Anspruch 1, **dadurch gekennzeichnet, dass** die Durchtriebswelle (90) im Differentialgehäuse (12) der ersten Achse (10) gelagert ist.

3. Tandemachse gemäß dem Anspruch 2, **dadurch gekennzeichnet, dass** die Durchtriebswelle (90) im Differentialgehäuse (12) oberhalb der Antriebswelle (14) angeordnet ist.

4. Tandemachse gemäß dem Anspruch 1, **dadurch gekennzeichnet, dass** das kuppelbare Verteilerrad (70) im Differentialgehäuse (12) der ersten Achse (10) gelagert ist.

5. Tandemachse gemäß dem Anspruch 1, **dadurch gekennzeichnet, dass** die Lamellenkupplung (40) elektromechanisch, elektromagnetisch, hydraulisch oder pneumatisch betätigbar ist.

6. Tandemachse gemäß dem Anspruch 5, **dadurch gekennzeichnet, dass** die Lamellenkupplung (40) als Hydraulikdruckerzeuger eine Ölpumpe (80) aufweist, die direkt von der Antriebswelle (14) der ersten Achse (10) angetrieben wird.

7. Tandemachse gemäß dem Anspruch 1, **dadurch gekennzeichnet, dass** die Kupplungen (140) fremdgeschaltete, formschlüssige Kupplungen sind.

8. Tandemachse gemäß dem Anspruch 7, **dadurch gekennzeichnet, dass** die Kupplungen (140) zwischen den jeweiligen Antriebshalbwellen (106) und den Achswellenrädern (104) angeordnet sind.

9. Tandemachse nach mindestens einem der vorangehenden Ansprüche, **dadurch gekennzeichnet, dass** die Betätigung der Kupplungen (40, 140) über elektromechanisch oder -magnetisch betätigbare Ventile steuerbar ist.

10. Tandemachse gemäß dem Anspruch 9, **dadurch gekennzeichnet, dass** die Ventile der Kupplungen (40, 140) über einen Rechner angesteuert werden, wobei der Rechner aus fahrdynamischen und fahrbahnseitigen Daten das Ein- und Auskuppeln regelt.

## Claims

1. Tandem axle having two drivable axles (10, 110), wherein each axle (10, 110) comprises a differential (101) with a drive gear (13, 113) drivable via a shaft (16, 116) as differential input and further comprises two drive half-shafts (106) driving the wheels (1, 2) of this axle (10, 110) via drive pinions (104),
- wherein the wheels (1) of the first axle (10) are permanently positively coupled to the drive gear (13),
- wherein the drive gear (13) of the first axle (10) has a drive shaft (14), which drive shaft (14) is located between the shaft (16) and the drive gear (13), a selectable distributor gear (70) sitting on the drive shaft (14),
- wherein the distributor gear (70) meshes with a through-drive shaft gear (95) non-rotatably mounted on a through-drive shaft (90),
- wherein the drive gear (113) of the second axle (110) has a drive shaft (114), which drive shaft (114) is coupled to the output (93) of the through-drive shaft (90) via intermediate members (18, 116, 117),
**characterised in that**
- the distributor gear (70) is selectable by means of a load-engaging and load-disengaging multi-plate clutch (40),
- and **in that** selectable clutches (140) are provided in the second axle (110) between the drive pinions (104) and their adjacent wheels (2).

2. Tandem axle according to claim 1, **characterised in that** the through-drive shaft (90) is bearing-mounted in the differential housing (12) of the first axle (10).

3. Tandem axle according to claim 2, **characterised in that** the through-drive shaft (90) is arranged in the differential housing (12) above the drive shaft (4).

4. Tandem axle according to claim 1, **characterised in that** the couplable distributor gear (70) is bearing-mounted in the differential housing (12) of the first axle (10).

5. Tandem axle according to claim 1, **characterised in that** the multi-plate clutch (40) can be actuated electromechanically, electromagnetically, hydraulically or pneumatically.

6. Tandem axle according to claim 5, **characterised in that** the multi-plate clutch (40) comprises as a hydraulic pressure generator an oil pump (80) which is directly driven by the drive shaft (14) of the first axle (10).

7. Tandem axle according to claim 1, **characterised in that** the clutches (140) are externally selected positive clutches.

8. Tandem axle according to claim 7, **characterised in that** the clutches (140) are located between the respective drive half-shafts (106) and the drive pinions (104).

9. Tandem axle according to any of the preceding claims, **characterised in that** the actuation of the clutches (40, 140) can be controlled via electromechanically or electromagnetically operated valves.

10. Tandem axle according to claim 9, **characterised in that** the valves of the clutches (40, 140) are selected via a computer, the computer controlling in a closed loop their engagement and disengagement on the basis of dynamic handling and road data.

## Revendications

1. Essieu de tandem doté de deux essieux entraînés (10, 110), chaque essieu (10, 110) comprenant une transmission de compensation (101) dotée d'un pignon d'entraînement (13, 113) qui peut être entraîné par un arbre (16, 116) comme entrée de la transmission de compensation et deux demi-arbres d'entraînement (106) qui entraînent les roues (1, 2) de ces essieux (10, 110) par des roues d'arbre (104),
- les roues (1) du premier essieu (10) étant accouplées de force en permanence au pignon d'entraînement (13),
- le pignon d'entraînement (13) du premier essieu (10) présentant un arbre d'entraînement (14), lequel arbre d'entraînement (14) est disposé entre l'arbre (16) et le pignon d'entraînement (13), un pignon de répartition (70) embrayable repose sur l'arbre d'entraînement (14),
- le pignon de répartition (70) s'engrenant sur un pignon d'arbre de transmission (95) disposé à rotation solidaire sur un arbre de transmission (90),
- le pignon d'entraînement (113) du second essieu (110) présentant un arbre d'entraînement (114), lequel arbre d'entraînement (114) est accouplé à la sortie (93) de l'arbre de transmission (90) par des membres intermédiaires (18, 116, 117), **caractérisé en ce que**
- le pignon de répartition (70) peut être raccordé au moyen d'un embrayage à disques multiples (40) embrayable et débrayable sous charge,
- et dans le second essieu (110) entre les roues d'arbre (104) et les roues adjacentes (2) sont disposés des accouplements embrayables (140).

2. Essieu de tandem selon la revendication 1, **caractérisé en ce que** les arbres de transmission (90) sont montés dans le boîtier différentiel (12) du premier essieu (10).

3. Essieu de tandem selon la revendication 2, **caractérisé en ce que** les arbres de transmission (90) sont disposés dans le boîtier différentiel (12) au-dessus de l'arbre d'entraînement (14).

4. Essieu de tandem selon la revendication 1, **caractérisé en ce que** le pignon de répartition (70) couplable est monté dans le boîtier du différentiel (12) du premier essieu (10).

5. Essieu de tandem selon la revendication 1, **caractérisé en ce que** l'embrayage à disques multiples (40) peut être commandé de manière électromécanique, électromagnétique, hydraulique ou pneumatique.

6. Essieu de tandem selon la revendication 5, **caractérisé en ce que** l'embrayage à disques multiples (40) présente une pompe à huile (80) comme générateur de pression hydraulique laquelle est entraînée directement par l'arbre d'entraînement (14) du premier essieu (10).

7. Essieu de tandem selon la revendication 1, **caractérisé en ce que** les accouplements (140) sont des embrayages par liaison de forme à commande externe.

8. Essieu de tandem selon la revendication 7, **caractérisé en ce que** les accouplements (140) sont disposés entre chaque demi-arbre d'entraînement (106) et les roues d'arbre d'entraînement (104).

9. Essieu de tandem selon l'une quelconque des revendications précédentes, **caractérisé en ce que** l'actionnement des accouplements (40, 140) peut être piloté par des soupapes électromécaniques ou électromagnétiques.

10. Essieu de tandem selon la revendication 9, **caractérisé en ce que** les soupapes des accouplements (40, 140) sont pilotées par un ordinateur, l'ordinateur réglant le couplage et découplage à partir de données relatives à la dynamique du mouvement du véhicule et à la voie de circulation.
